# EUROPÄISCHE PATENTANMELDUNG

(11) **EP 3 865 329 A1**
(43) Veröffentlichungstag der Anmeldung: **18.08.2021**
(21) Anmeldenummer: 21152434.3
(22) Anmeldetag: 20.01.2021
(51) Int. Cl.: B60K 6/48, B60K 6/36, B60K 6/547, F16H 3/093, F16H 3/08

(54) **ANTRIEBSBAUGRUPPE MIT E-MASCHINE FÜR EIN KRAFTFAHRZEUG**

(30) Priorität: 11.02.2020 DE 102020103406
(71) Anmelder: Getrag Ford Transmissions GmbH, 50735 Köln (DE)
(72) Erfinder: Chazotte, Jean-Pierre, 50226 Frechen (DE)
(74) Vertreter: Wagner Albiger & Partner Patentanwälte mbB

(57) **Zusammenfassung**

Die Erfindung betrifft eine Antriebsbaugruppe (1) für ein Kraftfahrzeug, umfassend eine E-Maschine (2) und ein Schaltgetriebe (3), wobei das Schaltgetriebe (3) aufweist:
- eine Eingangswelle (10), die sich mit einem Verbrennungsmotor des Kraftfahrzeugs koppeln lässt,
- eine erste Ausgangswelle (20), auf der ein erstes Ritzel (21) angeordnet ist;
- eine zweite Ausgangswelle (30), auf der ein zweites Ritzel (31) angeordnet ist,
- ein Abtrieb (40) mit einem Ringrad (41), das mit dem ersten Ritzel (21) und dem zweiten Ritzel (31) kämmt,
- mehrere schaltbare Hauptgänge (I, II, III, IV, V, R), um ein Drehmoment von dem Verbrennungsmotor auf den Abtrieb (40) zu übertragen,
- mehrere schaltbare Nebengänge (e1, e2), um ein Drehmoment von der E-Maschine (2) auf den Abtrieb (40) zu übertragen,
wobei jedem Hauptgang (I, II, III, IV, V, R) und jedem Nebengang (e1, e2) ein schaltbares Losrad und eine Gangschaltkupplung zugeordnet sind.

Erfindungsgemäß ist vorgesehen dass auf der zweiten Ausgangswelle (30) wenigstens ein erstes Losrad (32) und ein zweites Losrad (33) angeordnet sind, wobei das erste Losrad (32) einem der Hauptgänge (I, II, III, IV, V, R) und das zweite Losrad (33) einem der Nebengänge (e1, e2, e3) zugeordnet sind.

## Beschreibung

Die Erfindung betrifft eine Antriebsbaugruppe für ein Kraftfahrzeug, die eine E-Maschine und ein Schaltgetriebe umfasst, das eine mit einem Verbrennungsmotor des Kraftfahrzeugs koppelbare Eingangswelle, eine erste Ausgangswelle und eine zweite Ausgangswelle aufweist.

Aus der WO 2018/073378 A1 ist eine solche Antriebsbaugruppe bekannt. Die erste Ausgangswelle trägt drehfest ein erstes Ritzel, das mit einem Ringrad eines Abtriebs kämmt. Die Eingangswelle weist mehrere Festräder auf, die mit auf der ersten Ausgangswelle angeordneten Losrädern kämmen. Jedes der Losräder kann einem schaltbaren Hauptgang zugeordnet werden, um in unterschiedlichen Übersetzungsverhältnissen ein Drehmoment vom Verbrennungsmotor auf den Abtrieb zu übertragen. Mit Hilfe von weiteren Losrädern, die auf der zweiten Ausgangswelle angeordnet sind, lassen sich schaltbare Nebengänge realisieren, um ein Drehmoment von der E-Maschine auf den Abtrieb zu übertragen. Jedem der durch die E-Maschine angetriebenen Nebengänge und jedem der durch den Verbrennungsmotor angetriebenen Hauptgänge lässt sich neben dem schaltbaren Losrad eine Gangschaltkupplung zuordnen, um das betreffende Losrad zu schalten, also um eine drehfeste Verbindung zwischen dem Losrad und der das Losrad tragenden Ausgangswelle herzustellen. Auf der zweiten Ausgangswelle sitzt zudem ein zweites Ritzel, das wie das auf der ersten Ausgangswelle sitzende erste Ritzel mit dem Ringrad kämmt.

Die Antriebsbaugruppe der WO 2018/073378 A1 weist den Vorteil auf, dass bei jedem durch den Verbrennungsmotor angetriebenen Hauptgang (kurz: motorisch angetriebener Hauptgang) das Drehmoment des Verbrennungsmotors durch das Drehmoment der E-Maschine mittels einer der durch die E-Maschine angetriebenen Nebengänge (kurz: elektrisch angetriebener Nebengang) unterstützt werden kann. Das erste Ritzel muss dabei nur das Drehmoment des Verbrennungsmotors auf das Ringrad übertragen, während an anderer Stelle durch das zweite Ritzel das elektrische Drehmoment auf das Ringrad übertragen wird. Durch diesen Hybrid-Modus lässt sich ein großes Gesamt-Drehmoment auf das Ringrad übertragen, wobei das jeweilige Ritzel nur den motorischen bzw. den elektrischen Anteil des Gesamt-Drehmoments übertragen muss. Es ist also nicht notwendig, im Hybrid-Modus zwecks Vermeidung einer Überbelastung des ersten Ritzels das motorische Drehmoment zu reduzieren. Die Antriebsbaugruppe ermöglicht zudem je nach Bedarf einen rein elektrischen Antrieb oder einen rein motorischen Antrieb des Kraftfahrzeugs.

Die in der WO 2018/073378 A1 offenbarte Antriebsbaugruppe weist lediglich vier motorisch angetriebene Hauptgänge auf. Aufgrund verschärfter Abgasnormen, dem ständigen Bedarf an Verbrauchsreduktion und Fahrkomfortverbesserung weisen heutige Antriebsbaugruppen oft mehr als vier Hauptgänge auf. Eine größere Anzahl von motorisch angetriebenen Hauptgängen bedeutet grundsätzlich einen größeren Platzbedarf, was gerade bei kleineren Kraftfahrzeugen mit Frontantrieb, bei denen der Verbrennungsmotor quer zur Fahrrichtung eingebaut ist, zu größeren Packaging-Problemen führt.

Der Erfindung liegt daher die Aufgabe zu Grunde, für ein Kraftfahrzeug eine eine E-Maschine umfassende Antriebsbaugruppe bereitzustellen, die sich mit einem Verbrennungsmotor koppeln lässt, kompakt baut und einen hohen Fahrkomfort bei günstigen Verbrauchswerten ermöglicht.

Die der Erfindung zu Grunde liegende Aufgabe wird mit der Merkmalskombination gemäß Anspruch 1 gelöst. Ausführungsbeispiele der Erfindung können den Unteransprüchen zu Anspruch 1 entnommen werden.

Erfindungsgemäß ist vorgesehen, dass auf der zweiten Ausgangswelle wenigstens ein erstes Losrad und ein zweites Losrad angeordnet sind, wobei das erste Losrad einem der motorisch angetriebenen Hauptgänge und das zweite Losrad einem der elektrisch angetriebenen Nebengänge zugeordnet sind. Gegenüber der Antriebsbaugruppe der WO 2018/073378 A1 wird somit die strikte getriebetechnische Trennung zwischen den elektrisch angetriebenen Nebengängen einerseits, deren schaltbare Losräder alle auf der zweiten Ausgangswelle angeordnet sind, und den motorisch angetriebenen Hauptgängen, deren schaltbare Losräder alle auf der ersten Ausgangswelle angeordnet sind, aufgehoben. Dies führt erfindungsgemäß zu einer größeren Flexibilität bei dem Aufbau des Radsatzes, wodurch Packinging-Anforderungen leichter erfüllt werden können.

In einem Ausführungsbeispiel, bei dem die Losräder aller elektrisch betriebenen Nebengänge auf der zweiten Ausgangswelle angeordnet sind, wird bewusst in Kauf genommen, dass bei dem eingelegten Hauptgang, dem das auf der zweiten Ausgangswelle sitzende erste Losrad zugeordnet, eine Drehmomentunterstützung durch die E-Maschine (Boost-Funktion) zu einer hohen Belastung des auf der zweiten Ausgangswelle sitzenden zweiten Ritzels führt. Das zweite Ritzel muss dann nämlich sowohl das elektrische Drehmoment als auch das motorische Drehmoment auf den Abtrieb übertragen.

Vorzugsweise ist der Hauptgang, dem das auf der zweiten Ausgangswelle sitzende erste Losrad zugeordnet ist, als ein vierter Hauptvorwärtsgang des Schaltgetriebes ausgebildet. Somit existieren genau drei weitere Hauptvorwärtsgänge, die ein größeres Übersetzungsverhältnis (Drehzahl des Ringrads bezogen auf die Drehzahl des Antriebs, hier des Verbrennungsmotors) aufweisen als der vierte Hauptvorwärtsgang. Dem liegt die Überlegung zugrunde, dass für den vierten Hauptvorwärtsgang eine Unterstützung durch die E-Maschine zum Zwecke eines hohen Fahrkomforts nur in einem moderaten Umfang notwendig ist. Eine mechanische Überbelastung des zweiten Ritzels kann somit ausgeschlossen werden.

In einem Ausführungsbeispiel ist zwischen dem ersten Losrad und dem zweiten Losrad auf der zweiten Ausgangswelle eine erste Doppelgangschaltkupplung angeordnet. Mit dieser Doppelgangschaltkupplung lässt sich wahlweise das erste Losrad des motorisch angetriebenen Hauptgangs oder das zweite Losrad des elektrisch angetriebenen Nebengangs mit der zweiten Ausgangswelle drehfest verbinden. Dies führt zu einer kompakten axialen Bauweise der zweiten Ausgangswelle. Zwar schließt die Verwendung der ersten Doppelgangschaltkupplung aus, dass der motorisch angetriebene Hauptgang, dem das erste Losrad zugeordnet ist, durch die E-Maschine über den elektrisch angetriebenen Nebengang, dem das zweite Losrad zugeordnet ist, unterstützt werden kann, doch dies bedeutet nicht, dass dieser Hauptgang nicht durch einen anderen elektrisch angetriebenen Nebengang eine Unterstützung erfahren kann.

Die erste Doppelgangschaltkupplung kann eine Schiebemuffe aufweisen, die durch einen Aktuator beispielsweise in Form einer Schaltgabel axial in Richtung des ersten Losrads oder des zweiten Losrads axial verschoben werden kann. Somit weist die Antriebsbaugruppe die Besonderheit auf, dass ein motorisch angetriebener Hauptgang und ein elektrisch angetriebener Nebengang mit einem gleichen Aktuator bzw. mit einer gleichen Schaltgabel eingelegt werden können.

Die erste Doppelgangschaltkupplung kann eine Gangschaltkupplung mit Synchroneinheit und eine Gangschaltkupplung ohne Synchroneinheit aufweisen. Die Gangschaltkupplung mit Synchroneinheit ist dabei vorzugsweise dem motorisch angetriebenen Hauptgang zugeordnet, während die Gangschaltkupplung ohne Synchroneinheit dem elektrisch angetriebenen Nebengang zugeordnet ist. Eine Synchronisierung der Drehzahl des zweiten Losrads des elektrisch angetriebenen Nebengangs und der Drehzahl der zweiten Ausgangswelle erfolgt zweckmäßig über eine entsprechende Steuerung der Drehzahl der E-Maschine.

In einem Ausführungsbeispiel ist ein zusätzlicher Nebengang vorgesehen, um ein Drehmoment von der E-Maschine auf die Eingangswelle zu übertragen. Dabei ist es möglich, dass bei stillstehenden Ausgangswellen die E-Maschine zum Starten des Verbrennungsmotors verwendet werden kann. Somit ist auch eine Antriebsbaugruppe offenbart, bei der das Drehmoment der E-Maschine bei wenigstens zwei schaltbaren Nebengängen direkt, also ohne Zwischenschaltung der Eingangswelle, auf den Abtrieb übertragen wird, während bei dem zusätzlichen Nebengang das Drehmoment der E-Maschine auf die Eingangswelle geleitet wird. Je nach Schaltzustand der Antriebsbaugruppe ist es dann möglich, dieses von der E-Maschine stammende und an der Eingangswelle anliegende Drehmoment über die Ausgangswelle an den Abtrieb weiter zu leiten. Die E-Maschine ist dann entsprechend direkt mit dem Abtrieb oder mit der Eingangswelle koppelbar.

In einem Ausführungsbeispiel ist eine Zusatzwelle vorgesehen, auf der ein drittes Losrad und eine weitere Gangschaltkupplung angeordnet ist, wobei das dritte Losrad und die weitere Gangschaltkupplung einem zusätzlichen elektrisch angetriebenen Nebengang zugeordnet sind, und wobei das dritte Losrad mit einem Zwischenrad kämmt, das auf der zweiten Ausgangswelle angeordnet ist. Ist durch die weitere Gangschaltkupplung eine drehfeste Verbindung zwischen der Zusatzwelle und dem dritten Losrad hergestellt, ist eine Übertragung des Drehmoments von der E-Maschine auf das Zwischenrad möglich.

Das Zwischenrad auf der zweiten Ausgangswelle kann als ein viertes Losrad ausgebildet sein, das einem weiteren der Hauptgänge und vorzugsweise einem Hauptrückwärtsgang zugeordnet ist. Somit ist es möglich, über die E-Maschine das vierte Losrad anzutreiben. Wenn das vierte Losrad dabei mit der zweiten Ausgangswelle drehfest verbunden ist, kann das Kraftfahrzeug nur mithilfe der E-Maschine bewegt werden, im Falle der Zuordnung des vierten Losrads zu dem Hauptrückwärtsgang also rückwärts bewegt werden. Besteht keine drehfeste Verbindung zwischen dem dritten Losrad und der Zusatzwelle, so lässt sich bei drehfest mit der zweiten Ausgangswelle verbundenem vierten Losrad das Fahrzeug auch nur über den Verbrennungsmotor rückwärts bewegen. Zudem ist auch ein Hybrid-Modus möglich, bei dem das Fahrzeug mit der E-Maschine und dem Verbrennungsmotor gemeinsam im Rückwärtsgang bewegt wird.

Das Zwischenrad kann mit einem fünften Losrad kämmen, das auf der ersten Ausgangswelle angeordnet ist und mit einem Festrad auf der ersten Eingangswelle kämmt. Somit ist es möglich, über die E-Maschine den Verbrennungsmotor zu starten. Zum Starten des Verbrennungsmotors verläuft dabei der Drehmomentverlauf von der E-Maschine über das drehfest mit der Zusatzwelle verbundene dritte Losrad, das Zwischenrad und dem fünften Losrad auf der ersten Ausgangswelle zu dem Festrad auf der ersten Eingangswelle. Das Starten des Verbrennungsmotors kann dabei im Stillstand des Kraftfahrzeugs erfolgen, wenn das Zwischenrad als Losrad bzw. schaltbares Losrad auf der zweiten Ausgangswelle ausgebildet ist.

In einem Ausführungsbeispiel der Erfindung ist das fünfte Losrad einem ersten Hauptvorwärtsgang zugeordnet. Durch den ersten Hauptvorwärtsgang lässt sich das größte Übersetzungsverhältnis zwischen der Drehzahl des Verbrennungsmotors und der Drehzahl des Ringrads in Vorwärtsrichtung des Kraftfahrzeugs realisieren.

Auf der zweiten Ausgangswelle kann zwischen dem vierten Losrad und einem sechsten Losrad eine zweite Doppelgangschaltkupplung angeordnet sein wobei das sechste Losrad vorzugsweise einem weiteren elektrisch angetriebenen Nebengang zugeordnet ist. Diese zweite Doppelgangschaltkupplung kann wie die erste Doppelgangschaltkupplung aufgebaut sein, bei der eine Gangschaltkupplung mit Synchroneinheit und die andere Gangschaltkupplung ohne Synchroneinheit ausgebildet ist.

Auf der ersten Ausgangswelle können weitere Losräder angeordnet sein, die weiteren Hauptvorwärtsgängen zugeordnet sind. In einem Ausführungsbeispiel sind auf der ersten Ausgangswelle eine dritte Doppelgangschaltkupplung und eine vierte Doppelgangschaltkupplung angeordnet. Im Gegensatz zu der ersten Doppelgangschaltkupplung und der zweiten Doppelgangschaltkupplung weisen die dritte und vierte Doppelgangschaltkupplung vorzugsweise nur Gangschaltkupplungen mit Synchroneinheiten auf.

Ein Durchmesser des ersten Ritzels auf der ersten Ausgangswelle kann von einem Durchmesser des zweiten Ritzels auf der zweiten Ausgangswelle verschieden sein. Vorzugsweise ist der Durchmesser des ersten Ritzels größer als der Durchmesser des zweiten Ritzels. Die Durchmesser der Ritzel haben dabei Einfluss auf das Übersetzungsverhältnis der Hauptgänge und der Nebengänge. Eine besonders gute Abstufung der Übersetzungsverhältnisse der Hauptgänge bei kompakter Bauweise der Antriebsbaugruppe lässt sich in einem Ausführungsbeispiel, in dem die Losräder des ersten Hauptvorwärtsgangs, eines zweiten Hauptvorwärtsgangs, eines dritten Hauptvorwärtsgangs und eines fünften Hauptvorwärtsgangs auf der ersten Ausgangswelle und das Losrad des vierten Hauptvorwärtsgangs auf der zweiten Ausgangswelle angeordnet sind, erreichen, wenn der Durchmesser des ersten Ritzels auf der ersten Ausgangswelle um den Faktor 1,2 bis 1,8 (ein bevorzugter Bereich ist 1,4 bis 1,6) größer ist als der Durchmesser des zweiten Ritzels auf der zweiten Ausgangswelle.

Ein siebtes Losrad, das auf der ersten Ausgangswelle angeordnet ist, und das erste Losrad auf der zweiten Ausgangswelle können mit einem weiteren auf der Eingangswelle angeordneten Festrad gleichzeitig kämmen. Dieses Festrad steht somit gleichzeitig direkt mit dem ersten Losrad und direkt mit dem zweiten Losrad in kämmenden Eingriff. Entsprechend wird hier die Begrifflichkeit "kämmender Eingriff zwischen zwei Zahnrädern" so verstanden, dass die Zähne des einen Zahnrads in direkten unmittelbaren Kontakt mit den Zähnen des anderen Zahnrads kommen.

Auch sei darauf hingewiesen, dass die Begrifflichkeit "siebtes Losrad" nicht zwangsläufig bedeutet, dass die Antriebsbaugruppe wenigstens sieben Losräder umfassen muss. Vielmehr soll durch die Begrifflichkeit "siebtes Losrad" eine Abgrenzung zu anderen Losrädern erfolgen. Dies gilt sinngemäß auch für alle anderen hier beschriebenen Losräder und Doppelgangschaltkupplungen.

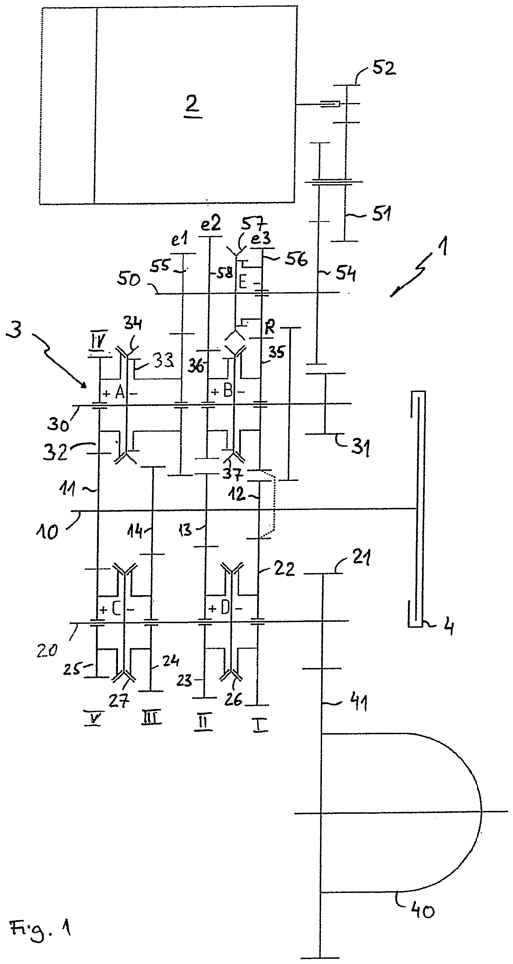

Anhand eines in der einzigen Figur 1 dargestellten Ausführungsbeispiels wird die Erfindung näher erläutert. Figur 1 zeigt schematisch den Aufbau einer erfindungsgemäßen Antriebsbaugruppe für ein Kraftfahrzeug.

Eine in ihrer Gesamtheit mit 1 bezeichnete Antriebsbaugruppe umfasst eine E Maschine 2 und ein Schaltgetriebe 3. Das Schaltgetriebe 3 weist eine Eingangswelle 10 auf, die sich mit einem hier nicht dargestellten Verbrennungsmotor eines Kraftfahrzeugs über eine Kupplung 4 verbinden lässt. Das Schaltgetriebe 3 weist des Weiteren eine erste Ausgangswelle 20, eine zweite Ausgangswelle 30 und einen Abtrieb 40 in Form eines Differenzials auf.

Auf der ersten Ausgangswelle 20 ist ein erstes Ritzel 21 drehfest angeordnet, das mit einem Ringrad 41 des Differenzials 40 kämmt. Des Weiteren steht im kämmenden Eingriff mit dem Ringrad 41 ein zweites Ritzel 31, das drehfest auf der zweiten Ausgangswelle 30 sitzt. Durch die Ritzel 21, 31 und dem Ringrad 41 ist somit ein Drehmomentfluss von den Ausgangswellen 20, 30 auf den Abtrieb 40 möglich.

Zur Ankopplung der E-Maschine 2 an der zweiten Ausgangswelle 30 ist eine Zusatzwelle 50 und ein gestuftes Transferrad 51 vorgesehen, die zwischen einem koaxial zum Rotor der E-Machine 2 angeordneten Antriebszahnrad 52 und der zweiten Ausgangswelle 30 geschaltet sind.

Auf der zweiten Ausgangswelle 30 sind ein erstes Losrad 32 und ein zweites Losrad 33 angeordnet. Die Losräder 32, 33 lassen sich über eine erste Doppelgangschaltkupplung 34 wahlweise mit der zweiten Ausgangswelle 30 drehfest verbinden. Wird eine Schiebemuffe der ersten Doppelgangschaltkupplung in der Darstellung der Figur 1 nach rechts verschoben (A-), so wird eine drehfeste Verbindung zwischen dem zweiten Losrad 33 und der zweiten Ausgangswelle 30 hergestellt. In diesem Fall soll ein erster elektrisch angetriebener Nebengang e1 eingelegt sein, so dass die E-Maschine 2 den Abtrieb 40 und somit das Kraftfahrzeug antreiben kann. Das Drehmoment der E-Maschine 2 wird dabei von dem Antriebszahnrad 52 über das gestufte Transferzahnrad 51 auf ein Festrad 54 der Zusatzwelle 50 übertragen. Von der Zusatzwelle 50 fließt das Drehmoment über ein weiteres Festrad 55, das zweite Losrad 33 und über die zweite Ausgangswelle 30 auf das zweite Ritzel 31 und somit auf das Ringrad 41.

Wird hingegen die Schiebemuffe der ersten Doppelgangschaltkupplung 34 in der Darstellung der Figur 1 nach links bewegt (+A), und ist ein vierter Hauptvorwärtsgang IV eingelegt. Durch den eingelegten vierten Hauptvorwärtsgang IV lässt sich ein Drehmoment des Verbrennungsmotors von der Eingangswelle 10 auf den Abtrieb 40 übertragen. Der Drehmomentfluss erfolgt dabei von der Eingangswelle 10 auf ein Festrad 11, welches mit dem ersten Losrad 32 kämmt.

Auf der Zusatzwelle 50 sitzt ein drittes Losrad 56, dass sich über eine Gangschaltkupplung 57 drehfest mit der Zusatzwelle 50 verbinden lässt. Das dritte Losrad 56 steht im kämmenden Eingriff mit einem Zwischenrad bzw. einem vierten Losrad 35, dass einem Hauptrückwärtsgang R zugeordnet ist. Das vierte Losrad 35 kämmt wiederum mit einem fünften Losrad 22, welches auf der ersten Ausgangswelle 20 drehbar gelagert ist. Dieses fünfte Losrad 22 kämmt mit einem weiteren Festrad 12 auf der Eingangswelle 10. Durch die Gangschaltkupplung 57 lässt sich ein elektrisch angetriebener zusätzlicher Nebengang e3 einlegen, auf den später noch näher eingegangen wird.

Auf der zweiten Ausgangswelle 30 ist zudem ein sechstes Losrad 36 angeordnet, das mit einem Festrad 58 auf der Zusatzwelle 50 kämmt. Eine zweite auf der zweiten Ausgangswelle 30 angeordnete Doppelgangschaltkupplung 37 ist zwischen den Losrädern 36, 35 angeordnet und dient dazu, diese Losräder 35, 36 wahlweise mit der zweiten Ausgangswelle 30 drehfest zu verbinden.

Ist eine Schiebemuffe der zweiten Doppelgangschaltkupplung in der Darstellung der Figur 1 nach links axial verschoben (+B), ist ein zweiter elektrisch angetriebener Nebengang e2 eingelegt. Durch Verschiebung der Schiebemuffe nach rechts (B-) lässt sich der Hauptrückwärtsgang R einlegen.

Das Übersetzungsverhältnis des elektrisch angetriebenen Nebengangs e1 (Drehzahl der E-Maschine zur Drehzahl des Ringrads) ist größer als das Übersetzungsverhältnis von dem elektrisch angetriebenen Nebengang e2.

Soweit bei eingelegtem Hauptrückwärtsgang R auch der zusätzliche Nebengang e3 eingelegt ist, lässt sich eine Rückwärtsfahrt des Kraftfahrzeugs durch die E-Maschine realisieren. Der Drehmomentfluss erfolgt dabei ausgehend von der E-Maschine 2 über die Zusatzwelle 50 und dem damit dann drehfest verbundenen dritten Losrad 56 auf das vierte Losrad 35, welches dann mit der zweiten Ausgangswelle 30 drehfest verbunden ist. Hervorzuheben ist, dass in diesem Fall die E-Maschine in einer entgegen gesetzten Drehrichtung drehen muss als in dem Fall, in dem der erste elektrisch angetriebene Nebengang e1 eingelegt ist.

Der eingelegte zusätzliche Nebengang e3 kann jedoch auch dazu genutzt werden, den Verbrennungsmotor zu starten. In diesem Fall ist die Schiebemuffe der zweiten Doppelgangschaltkupplung 37 auf eine Neutralstellung zu setzen, so dass das vierte Losrad 35 drehbar auf der zweiten Ausgangswelle 30 gelagert ist. Das zum Starten des Verbrennungsmotors notwendige Drehmoment wird von der Zwischenwelle 50 und dem dritten Losrad 56 über das nun lediglich als Zwischenrad dienende Losrad 35 auf das ebenfalls lediglich als Zwischenrad dienende Losrad 22 und somit auf das Festrad 12 übertragen. Somit ist eine Ankopplung der E-Maschine 2 nicht nur auf die zweite Ausgangswelle 30, sondern auch auf die Eingangswelle 10 möglich.

Das fünfte Losrad 22 ist einem ersten Hauptvorwärtsgang I zugeordnet. Der erste Hauptvorwärtsgang I weist das größte motorische Übersetzungsverhältnis im Schaltgetriebe 3 auf. Zur Realisierung weiterer Hauptvorwärtsgängen sind auf der ersten Ausgangswelle 20 drei weitere Losräder 23, 24, 25 angeordnet, die sich über eine dritte Doppelgangschaltkupplung 26 bzw. über eine vierte Doppelgangschaltkupplung 27 drehfest mit der ersten Ausgangswelle 20 verbinden lassen. Das Losrad 23 lässt sich dabei einem zweiten Hauptvorwärtsgang II zuordnen. Mit den Losrädern 24, 25 werden ein dritter Vorwärtsgang und ein fünfter Vorwärtsgang realisiert. Das Losrad 25 des fünften Hauptvorwärtsgang V kämmt mit dem Festrad 11, das auch mit dem ersten Losrad 32 des vierten Haupt-Vorwärtsgangs IV kämmt. Die Losräder 23, 24 kämmen mit weiteren Festrädern 13, 14 auf der Eingangswelle.

Der Durchmesser des ersten Ritzels 21 ist größer als der Durchmesser des zweiten Ritzels 31. Das Verhältnis von Durchmesser des ersten Ritzels 21 zum Durchmesser des zweiten Ritzels 31 ist dabei so groß, dass das Übersetzungsverhältnis des vierten Hauptvorwärtsgangs IV größer ist als das Übersetzungsverhältnis des fünften Hauptvorwärtsgangs V, obwohl ein Durchmesser des dem fünften Hauptvorwärtsgangs V zugeordneten Losrads 25 größer ist als ein Durchmesser des dem vierten Hauptvorwärtsgangs IV zugeordneten Losrads 32. Mit dem fünften Hauptvorwärtsgang V soll die Höchstgeschwindigkeit des Kraftfahrzeugs erreicht werden.

Die findungsgemäße Antriebsbaugruppe 1 ermöglicht viele unterschiedliche Schaltkombinationen bzw. Betriebsmodi, von denen bereits einige oben beschrieben worden sind. Beispielsweise lässt sich in einem City-Modus das Kraftfahrzeug rein elektrisch betreiben, indem nur der erste elektrisch angetriebene Nebengang e1 eingelegt ist. Außer der ersten Doppelgangschaltkupplung 34 , die diesem Nebengang e1 zugeordnet ist und deren Schaltmuffe dann auf Position A- gerückt ist, befinden sich die Schaltmuffen aller übrigen Gangschaltkupplungen bzw. Doppelgangschaltkupplungen in Neutralstellung.

In einem Hybrid-Modus ist ein motorischer und elektrischer Antrieb des Kraftfahrzeugs möglich. Beispielsweise können der erste, zweite und dritte Hauptvorwärtsgang I, II und III durch den eingelegten ersten Nebengang e1 elektrisch unterstützt werden. Eine elektrische Unterstützung der motorisch angetriebenen Hauptvorwärtsgänge II, III, IV und V ist durch den eingelegten zweiten Nebengang e2 denkbar. Dabei ist es bei eingelegtem dritten Hauptvorwärtsgang III möglich, von dem ersten Nebengang e1 auf den zweiten Nebengang e2 zu wechseln. Ein Wechsel der Nebengänge e1 und e2 ist auch bei eingelegtem zweiten Hauptvorwärtsgang II möglich.

Beim Hochschalten und Runterschalten zwischen den Hauptvorwärtsgängen können die elektrisch angetriebenen Nebengänge e1 und e2 dazu eingesetzt werden, die Drehmomentlücke beim Schalten aufzufüllen, so dass ein Schalten der Hauptvorwärtsgänge ohne Zugkraftunterbrechung möglich ist.

Wie oben bereits erwähnt, lässt sich durch den eingelegten zusätzlichen Nebengang e3 im Stillstand des Kraftfahrzeugs der Verbrennungsmotor starten. Auch wäre es durch den Nebengang e3 möglich, im Stillstand bei laufendem Verbrennungsmotor die E-Maschine 2 als Generator zu betreiben, um beispielsweise eine Batterie im Kraftfahrzeug aufzuladen.

Ein Starten des Verbrennungsmotors bei sich bewegendem Kraftfahrzeug ist vielfältig möglich: Bei eingelegtem ersten Nebengang e1, wodurch das Kraftfahrzeug zunächst nur elektrisch angetrieben wird, kann beispielsweise der erste Hauptvorwärtsgang I zugeschaltet werden, wodurch bei geschlossener oder teilweise geschlossener Kupplung 4 der Verbrennungsmotor mitgeschleppt wird. Bei eingelegtem Nebengang e1 und umgekehrter Drehrichtung lässt sich auch bei einer Rückwärtsfahrt des Kraftfahrzeugs der Verbrennungsmotor starten, wobei nun der Hauptrückwärtsgang R einzulegen ist.

Durch die vorliegende Erfindung wird somit eine Antriebsbaugruppe bereitgestellt, die kompakt baut und eine sehr große Vielzahl an verschiedenen Betriebsmodi bietet. Die erfindungsgemäße Antriebsbaugruppe eignet sich insbesondere für kleinere hybridisierte Kraftfahrzeuge mit Front-Quer-Antrieb.

### Bezugszeichenliste

- 1: Antriebsbaugruppe
- 2: E-Maschine
- 3: Schaltgetriebe
- 4: Kupplung
- 10: Eingangswelle
- 11: Festrad
- 12: Festrad
- 13: Festrad
- 14: Festrad
- 20: erste Ausgangswelle
- 21: erstes Ritzel
- 22: fünftes Losrad
- 23: Losrad
- 24: Losrad
- 25: siebtes Losrad
- 26: dritte Doppelgangschaltkupplung
- 27: vierte Doppelgangschaltkupplung
- 30: zweite Ausgangswelle
- 31: zweites Ritzel
- 32: erstes Losrad
- 33: zweites Losrad
- 34: erste Doppelgangschaltkupplung
- 35: Zwischenrad / viertes Losrad
- 36: sechstes Losrad
- 37: zweite Doppelgangschaltkupplung
- 40: Abtrieb / Differenzial
- 41: Ringrad
- 50: Zusatzwelle
- 51: Transferrad
- 52: Antriebszahnrad
- 54: Festrad
- 55: Festrad
- 56: drittes Losrad
- 57: Gangschaltkupplung
- 58: Festrad

## Patentansprüche

1. Antriebsbaugruppe (1) für ein Kraftfahrzeug, umfassend eine E-Maschine (2) und ein Schaltgetriebe (3), wobei das Schaltgetriebe (3) aufweist:
- eine Eingangswelle (10), die sich mit einem Verbrennungsmotor des Kraftfahrzeugs koppeln lässt,
- eine erste Ausgangswelle (20), auf der ein erstes Ritzel (21) angeordnet ist;
- eine zweite Ausgangswelle (30), auf der ein zweites Ritzel (31) angeordnet ist,
- ein Abtrieb (40) mit einem Ringrad (41), das mit dem ersten Ritzel (21) und dem zweiten Ritzel (31) kämmt,
- mehrere schaltbare Hauptgänge (I, II, III, IV, V, R), um ein Drehmoment von dem Verbrennungsmotor auf den Abtrieb (40) zu übertragen,
- mehrere schaltbare Nebengänge (e1, e2), um ein Drehmoment von der E-Maschine (2) auf den Abtrieb (40) zu übertragen,
wobei jedem Hauptgang (I, II, III, IV, V, R) und jedem Nebengang (e1, e2) ein schaltbares Losrad und eine Gangschaltkupplung zugeordnet sind,
**dadurch gekennzeichnet, dass** auf der zweiten Ausgangswelle (30) wenigstens ein erstes Losrad (32) und ein zweites Losrad (33) angeordnet sind, wobei das erste Losrad (32) einem der Hauptgänge (I, II, III, IV, V) und das zweite Losrad (33) einem der Nebengänge (e1, e2, e3) zugeordnet sind.

2. Antriebsbaugruppe nach Anspruch 1, **dadurch gekennzeichnet, dass** der Hauptgang, dem das auf der zweiten Ausgangswelle (30) sitzenden erste Losrad (31) zugeordnet ist, als ein vierter Hauptvorwärtsgang (IV) ausgebildet ist.

3. Antriebsbaugruppe nach Anspruch 1 oder 2, **dadurch gekennzeichnet, dass** zwischen dem ersten Losrad (32) und dem zweiten Losrad (33) auf der zweiten Ausgangswelle (30) eine erste Doppelgangschaltkupplung (34) angeordnet ist.

4. Antriebsbaugruppe nach einem der Ansprüche 1 bis 3, **dadurch gekennzeichnet, dass** ein zusätzlicher schaltbarer Nebengang (e3) vorgesehen ist, um ein Drehmoment von der E-Maschine (2) auf die Eingangswelle (10) zu übertragen.

5. Antriebsbaugruppe nach Anspruch 4, **dadurch gekennzeichnet, dass** eine Zusatzwelle (50) vorgesehen ist, auf der ein drittes Losrad (56) und eine Gangschaltkupplung (57) angeordnet sind, wobei das dritte Losrad (56) und die Gangschaltkupplung (57) dem zusätzlichen Nebengang (e3) zugeordnet sind, und wobei das dritte Losrad (56) mit einem Zwischenrad (35) kämmt, das auf der zweiten Ausgangswelle (30) angeordnet ist.

6. Antriebsbaugruppe nach Anspruch 5, **dadurch gekennzeichnet, dass** das Zwischenrad (35) auf der zweiten Ausgangswelle (30) als ein viertes Losrad (35) ausgebildet ist, das einem Hauptrückwärtsgang (R) zugeordnet ist.

7. Antriebsbaugruppe nach Anspruch 5 oder 6, **dadurch gekennzeichnet, dass** das Zwischenrad mit einem fünften Losrad (22) kämmt, das auf der ersten Ausgangswelle (20) angeordnet ist und mit einem Festrad (12) auf der ersten Eingangswelle (10) kämmt.

8. Antriebsbaugruppe (1) nach Anspruch 7, **dadurch gekennzeichnet, dass** das fünfte Losrad einem ersten Hauptvorwärtsgang (I) zugeordnet ist

9. Antriebsbaugruppe nach einem der Ansprüche 1 bis 8, **dadurch gekennzeichnet, dass** auf der zweiten Ausgangswelle (30) zwischen dem vierten Losrad (35) und einem sechsten Losrad (36) eine zweite Doppelgangschaltkupplung (37) angeordnet ist, wobei das sechste Losrad (36) einem weiteren Nebengang (e2) zugeordnet ist.

10. Antriebsbaugruppe nach einem der Ansprüche 1 bis 9, **dadurch gekennzeichnet, dass** auf der ersten Ausgangswelle (10) weitere Losräder (23, 24, 25) angeordnet sind, die weiteren Hauptvorwärtsgängen (II, III, V) zugeordnet sind.

11. Antriebsbaugruppe nach Anspruch 10, **dadurch gekennzeichnet, dass** auf der ersten Ausgangswelle (20) eine dritte Doppelgangschaltkupplung (26) und eine vierte Doppelgangschaltkupplung (27) angeordnet sind.

12. Antriebsbaugruppe (1) nach einem der Ansprüche 1 bis 11, **dadurch gekennzeichnet, dass** ein Durchmesser des ersten Ritzels (21) auf der ersten Ausgangswelle (20) größer ist als ein Durchmesser des zweiten Ritzels (31) auf der zweiten Ausgangswelle (30).

13. Antriebsbaugruppe nach einem der Ansprüche 1 bis 12, **dadurch gekennzeichnet, dass** ein siebtes Losrad (25), das auf der ersten Ausgangswelle (20) angeordnet ist, und das erste Losrad (32) auf der zweiten Ausgangswelle (30) mit einem auf der Eingangswelle (10) angeordneten Festrad (12) gleichzeitig kämmen.
